# EUROPEAN PATENT SPECIFICATION

(11) **EP 3 248 739 B1**
(45) Date of publication and mention of the grant of the patent: **08.05.2024**
(21) Application number: 16740144.7
(22) Date of filing: 19.01.2016
(51) Int. Cl.: B25J 19/00

(54) **INDUSTRIAL ROBOT**
INDUSTRIEROBOTER
ROBOT INDUSTRIEL

(30) Priority: 21.01.2015 JP 2015009406
(43) Date of publication of application: 29.11.2017
(73) Proprietor: Kawasaki Jukogyo Kabushiki Kaisha, Kobe-shi, Hyogo 650-8670 (JP)
(72) Inventor: YAMAMOTO Masato, Akashi-shi Hyogo 673-8666 (JP); KITAMURA Shinji, Akashi-shi Hyogo 673-8666 (JP); HASHIMOTO Satoshi, Akashi-shi Hyogo 673-8666 (JP)
(74) Representative: Müller-Boré & Partner Patentanwälte PartG mbB
(86) International application number: PCT/JP2016/051388
(87) International publication number: WO 2016/117537

(56) References cited:
- EP-A1- 1 588 807
- EP-A1- 1 964 651
- JP-A- H1 034 588
- JP-A- H02 160 498
- JP-A- H05 131 388
- JP-A- H05 329 791
- JP-A- 2004 358 649
- JP-U- S 612 727

## Description

### Technical Field

The present invention relates to an industrial robot, particularly an industrial robot in which a wire body is inserted through the inside of an arm portion having a wrist portion.

### Background Art

In an industrial robot, an end effector selected corresponding to its application is mounted to a distal end of an arm portion. When a wrist portion is provided to the distal end of the arm portion, the end effector is mounted to the wrist portion. The wrist portion is swingable about a swing axis orthogonal to a longitudinal axis of the arm portion.

Every kind of wire body (wiring and piping) is connected to the end effector mounted to the distal end of the arm portion of the industrial robot in order to supply necessary power and material corresponding to its application.

For example, in the case of a coating robot, piping for supplying coating material to the end effector (coating gun), piping for supplying compressed air to spray the coating material, or the like is connected to the end effector. Additionally, in the case of a welding robot, piping for supplying a welding wire to the end effector (welding torch), piping for supplying welding current to the end effector, or the like is connected to the end effector.

Now, when the end effector is mounted to the wrist portion connected to the distal end of the arm portion of the robot, the wire body connected to the end effector is pulled out or conversely pressed back by a swing motion of the wrist portion.

Thus, when the wrist portion is inclined about its swing axis from the state that the longitudinal axis of the arm portion and a center axis of the wrist portion are aligned with each other (straightened state), tensile force or pressing force may occur to the wire body connected to the end effector. Additionally, also when the inclined wrist portion is returned to the straightened state, the pressing force or tensile force may occur to the wire body.

As above, when the tensile force or pressing force occurs to the wire body corresponding to the swing motion of the wrist portion, deficiency may occur in the motion of the wrist portion or the wire body may damage because of repeated stress.

In order to cope with such a problem, for example, it is conceivable that the wire body is largely expanded outward from the arm portion so that the wire body itself previously has allowance (play), and displacement of the wire body because of the swing motion of the wrist portion is absorbed by said allowance (play) part (patent document 1).

Patent document 2 describes a robot arm for an industrial robot, which includes a connection flange for a tool. The flange and tool can be rotated about axes by means of hollow joints. The energy supply system, i.e. the bundle of flexible tubes and/or cables is carried through to the tool. The flexible tubes and/or cables extend through a cavity in the arm base and the hollow joints, into the connection flange.

### Citation List

### Patent Documents

[Patent Document 1] Japanese Patent Application Laid-Open No. 2005-342860
[Patent Document 2] EP 1 964 651 A1

### Summary of Invention

### Objects to be Achieved by the Invention

Here, the wire body itself can previously have allowance (play) as above in the case of a robot in which the wire body is puled around on the outside of the arm portion. In contrast, in a robot in which the wire body is inserted through the inside of the arm portion, it is extremely difficult or impossible to employ the above method.

Further, when the wire body is inserted through the inside of the arm portion of the robot, the wire body displaced by the swing motion of the wrist portion may be caught by an edge portion of an insertion hole for wire body formed inside the arm portion.

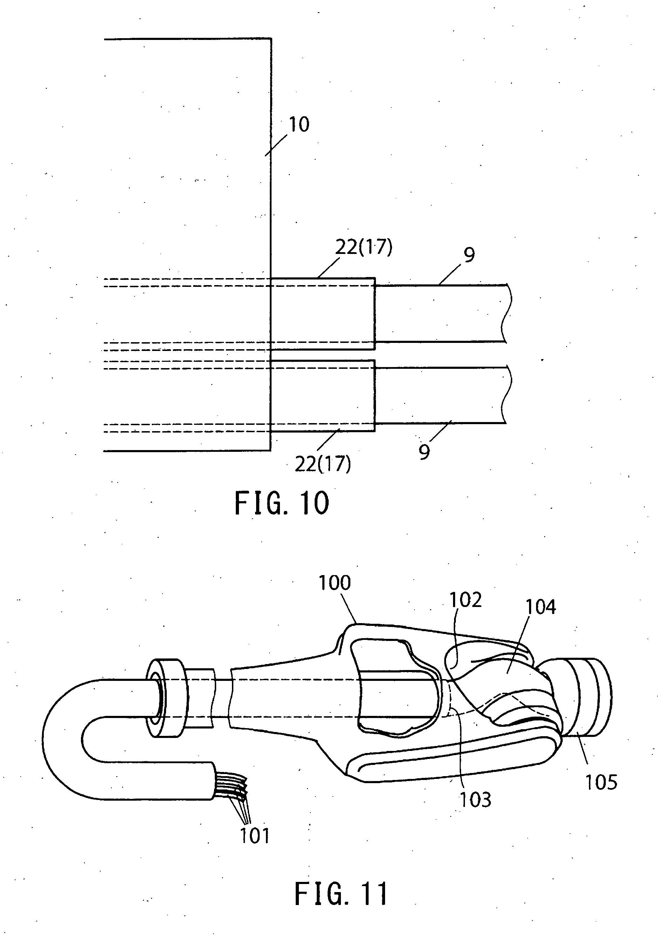

FIG. 11 illustrates a state that, in a robot in which a wire body 101 is inserted though the inside of an arm portion 100 of a conventional industrial robot, the wire body 101 is caught by an insertion hole 103 formed on a wall portion 102 inside the arm portion 100 and a part 104 of the wire body 101 is expanded in a mountain shape.

When the swing motion of a wrist portion 105 is repeated in the state in FIG. 11, deficiency may occur in the motion of the wrist portion 105 or the wire body 101 may damage due to the repeated stress.

The present invention is made considering the above-mentioned problems of the conventional technologies, and its object is to eliminate a conventional deficiency occurred corresponding to a swing motion of a wrist portion in an industrial robot in which a wire body is inserted through the inside of an arm portion having the wrist portion.

### Means for Achieving the Objects

An industrial robot according to the present invention is defined in claim 1.

### Advantageous Effect of the Invention

According to the present invention, in an industrial robot in which a wire body is inserted through the inside of an arm portion having a wrist portion, a conventional deficiency occurred corresponding to a swing motion of the wrist portion can be eliminated

### Brief Description of the Drawings

FIG. 1 is a perspective view illustrating an industrial robot according to one embodiment of the present invention.
FIG. 2 is an enlarged perspective view of an arm portion of the industrial robot in FIG. 1, illustrating a state that a wrist portion is straightened.
FIG. 3 is an enlarged perspective view of the arm portion of the industrial robot in FIG. 1, illustrating a state that the wrist portion is bent.
FIG. 4 is an enlarged perspective view of a main portion of the industrial robot in FIG. 1.
FIG. 5 is an enlarged plan view of the main portion of the industrial robot in FIG. 1.
FIG. 6 is a view illustrating an action of an energizing unit in the industrial robot in FIG. 1.
FIG. 7 is a plan view illustrating the main portion of the industrial robot according to a variation of the embodiment in FIG. 1.
FIG. 8 is a view illustrating an action of the energizing unit in the industrial robot in FIG. 7.
FIG. 9 is a perspective view illustrating the main portion of the industrial robot according to another variation of the embodiment in FIG. 1.
FIG. 10 is a plan view illustrating the main portion of the industrial robot according to another variation of the embodiment in FIG. 1.
FIG. 11 is a perspective view of an arm portion for illustrating problems of a conventional industrial robot.

### Embodiment of the Invention

Hereunder, an industrial robot according to one embodiment of the present invention will be described referring to the drawings.

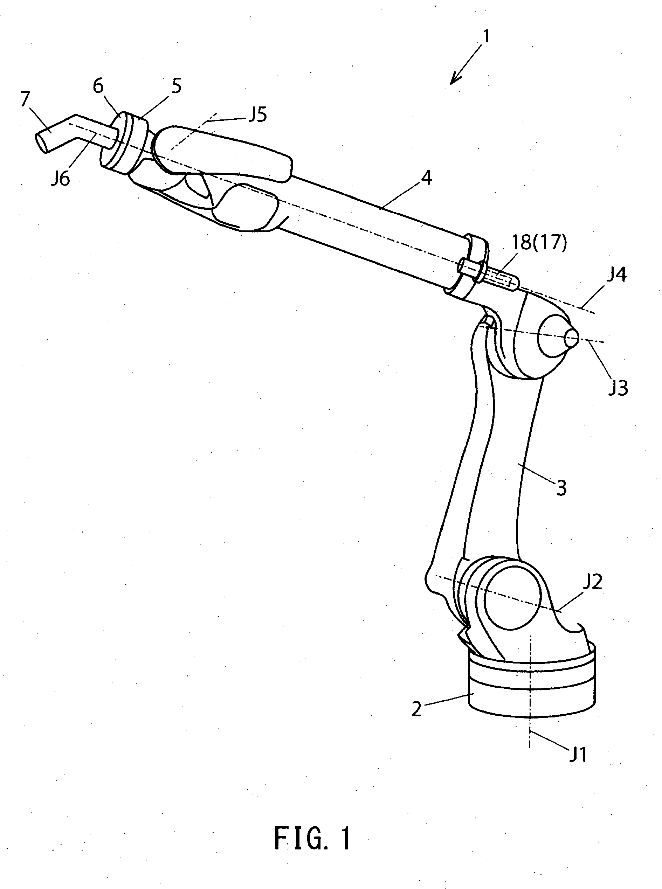

As illustrated in FIG. 1, the industrial robot 1 according to this embodiment has a base 2 which is rotatable about a first axis (turn axis) J1, and a base end of a lower arm 3 is connected to this base 2 so as to be rotatable about a second axis J2. A base end of an upper arm 4 is connected to a distal end of the lower arm 3 so as to be rotatable about a third axis J3.

The upper arm 4 is rotatable about its longitudinal axis (fourth axis) J4. A wrist portion 5 is connected to a distal end of the upper arm 4 so as to be swingable about a fifth axis (swing axis) J5. The fifth axis J5 is orthogonal to the longitudinal axis (fourth axis) J4 of the upper arm 4.

A rotary body 6 which is rotatable about a center axis (sixth axis) J6 of the wrist portion 5 is provided to a distal end surface of the wrist portion 5. An end effector 7 such as a coating gun or a welding torch is mounted to the rotary body 6.

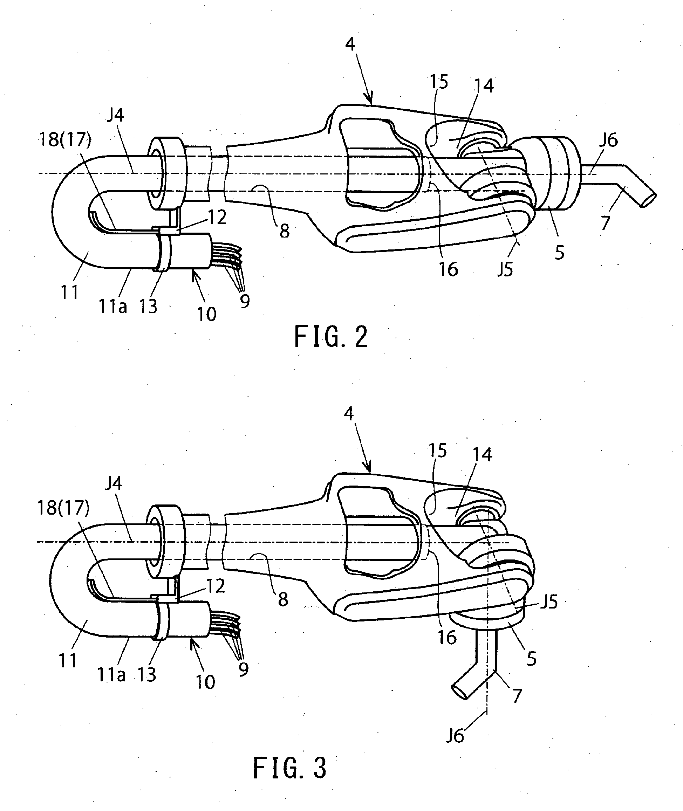

As illustrated in FIG.2 and FIG.3, a hollow part 8 which extends along the longitudinal axis J4 of the upper arm 4 is formed inside the upper arm 4. A plurality of wire bodies 9 as piping or wiring for supplying material and power to the end effector 7 are inserted through the hollow part 8 of the upper arm 4. A plurality of wire bodies 9 are covered by a tubular cover member 10 as a whole.

Distal ends of a plurality of wire bodies 9 are connected to the end effector 7 such as a coating gun or a welding torch. A plurality of wire bodies 9 covered by the tubular cover member 10 have a curved portion (U-shaped portion) 11 in a part extending outward from a base end of the upper arm 4. A folded portion 11a of the curved portion 11 of a plurality of wire bodies 9 is fixed to the side of the base end of the upper arm 4 by a mounting member consisting of a bracket 12 and a clamp 13.

The upper arm 4 has, on its distal end, an open space 14 which is opened in two directions orthogonal to both the longitudinal axis (fourth axis) J4 and the swing axis (fifth axis) J5. As is best illustrated in FIG. 3, the open space 14 is also opened forward, and the wrist portion 5 is arranged utilizing the part opened forward.

The open space 14 of the upper arm 4 is defined inside the upper arm 4 by a wall portion 15 which is provided on the opposite side of the wrist portion 5. In the wall portion 15, an insertion hole 16 through which a plurality of wire bodies 9 covered by the tubular cover member 10 are inserted is formed.

Note that, although the open space 14 of the upper arm 4 is opened in two directions orthogonal to both the longitudinal axis (fourth axis) J4 and the swing axis (fifth axis) J5 in this example, the open space may be formed so as to be opened in one direction as a variation.

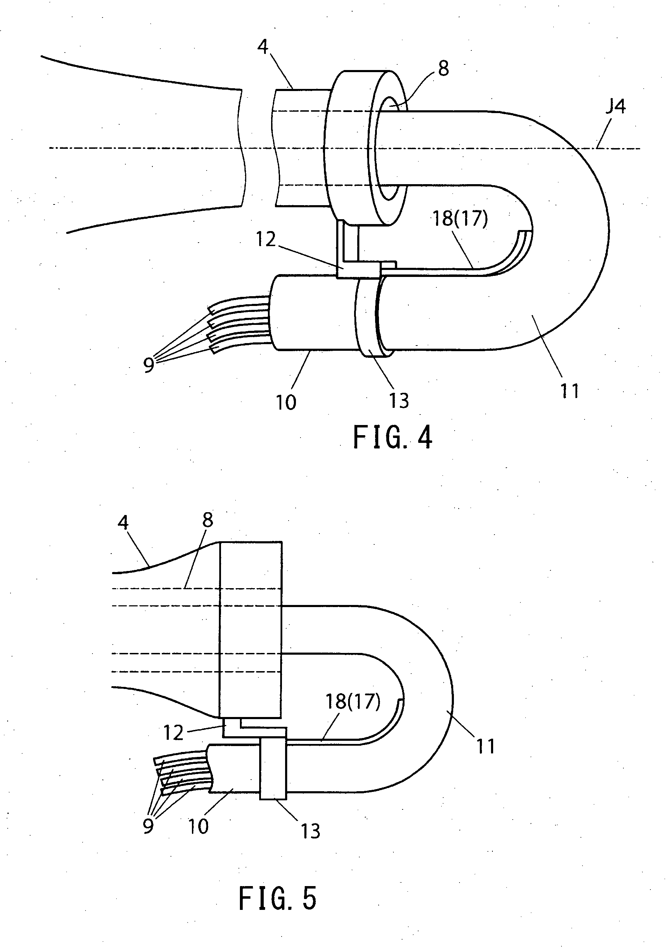

As illustrated in FIG. 4 and FIG. 5, the industrial robot according to this embodiment has an energizing unit 17 for energizing a plurality of wire bodies 9 in a separate direction (rearward) away from the wrist portion 5 along the longitudinal axis J4 of the upper arm 4. Specifically, the energizing unit 17 has a plate spring (elastic body) 18 for pulling a plurality of wire bodies 9 rearward.

A base end of the plate spring (elastic body) 18 is fixed to the upper arm 4 via the mounting member consisting of the bracket 12 and the clamp 13. The plate spring 18 is elastically deformed and extended along the curved portion 11 of a plurality of wire bodies 9, and thereby the plate spring 18 applies energizing force to the curved portion 11 of the wire bodies 9. Thus, due to restoring force of the plate spring 18 which is elastically deformed, a plurality of wire bodies 9 extending inside the upper arm 4 are pulled rearward along the longitudinal axis J4 of the upper arm 4 at all times.

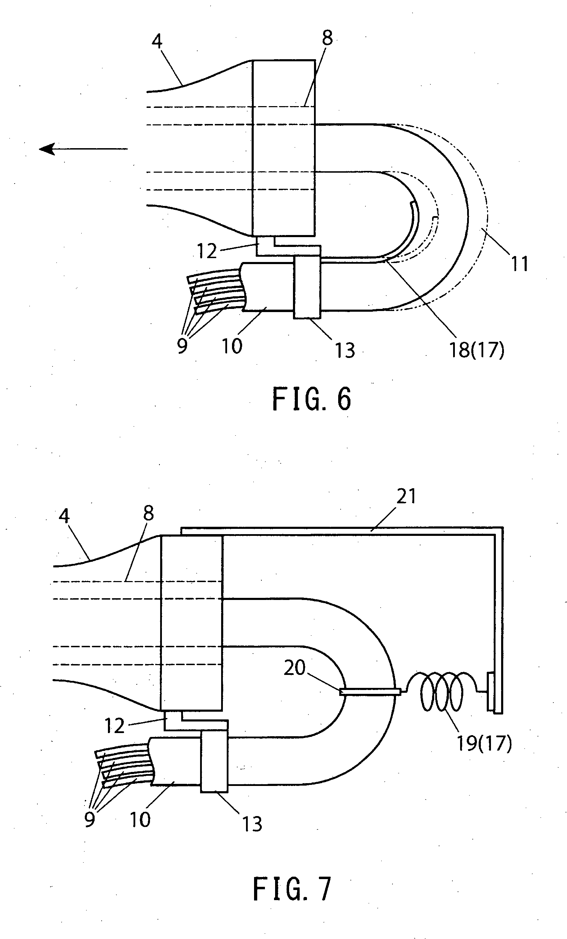

Further, in the industrial robot 1 according to this embodiment, when the state in FIG. 2 where the wrist portion 5 is straightened is changed to the state in FIG. 3 where the wrist portion 5 is bent, a plurality of wire bodies 9 are pulled in forward. As a result, the plate spring 18 is further curved as illustrated in FIG. 6.

When the wrist portion 5 is returned to the straightened state illustrated in FIG. 2 from the state in FIG. 6, the wire bodies 9 are pulled out rearward due to the elastic force (restoring force) of the plate spring 18. Therefore, the wire bodies 9 covered by the tubular cover member 10 are never caught by an edge portion of the insertion hole 16 formed in the wall portion 15 inside the upper arm 4.

In contrast, as mentioned previously, in the conventional industrial robot in FIG. 11, when the bent wrist portion 105 is returned to the straightened state, a part of the wire body 101 is caught by an edge portion of the insertion hole 103 formed in the wall portion 102 inside the upper arm 100 and immobilized, and the part 104 of the wire body 101 may be expanded in a mountain shape as illustrated in FIG. 11. If the swing motion of the wrist portion 105 is repeated in this state, deficiency may occur in the motion of the wrist portion 105 or a plurality of wire bodies 101 may damage as mentioned above.

In contrast, in the industrial robot 1 according to this embodiment, the wire body 9 is smoothly displaced forward and rearward corresponding to the swing motion of the wrist portion 5 by energizing the wire body 9 rearward by the energizing unit 17 consisting of the plate spring 18 as mentioned above, and therefore the problems above in the conventional industrial robot are solved.

As a variation of the.embodiment above, as the energizing unit 17, a helical spring (elastic body) 19 may be used as illustrated in FIG. 7 instead of the plate spring 18 illustrated in FIG. 4 and FIG. 5. One end of the helical spring 19 is fixed to the curved portion 11 of a plurality of wire bodies 9 via a ring member (mounting member) 20. The other end of the helical spring 19 is fixed to the upper arm 4 via a bracket (mounting member) 21. The helical spring 19 is in a pulled state at all times.

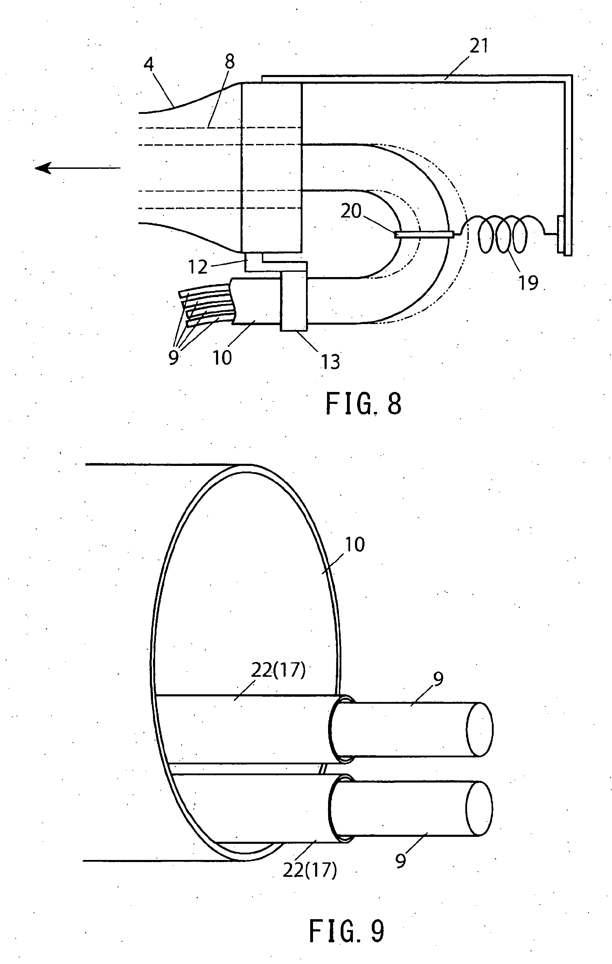

In the industrial robot according to this variation, when the state in FIG. 2 where the wrist portion 5 is straightened is changed to the state in "FIG. 3 where the wrist portion 5 is bent, a plurality of wire bodies 9 are pulled in forward, and the helical spring 19 is further stretched as illustrated in FIG. 8. When the wrist portion 5 is returned to the straightened state illustrated in FIG. 2 from this state, the wire bodies 9 are pulled back rearward due to the elastic force (restoring force) of the helical spring 19. Therefore, a plurality of wire bodies 9 covered by the tubular cover member 10 are never caught by an edge portion of the insertion hole 16 formed in the wall portion 15 inside the upper arm 4.

As another variation of the embodiment above, as illustrated in FIG. 9 and FIG. 10, all or part of a plurality of wire bodies 9 may respectively inserted through an elastic tubular member 22 having elasticity. In this variation, the energizing unit 17 is configured so as to energize the wire body 9 utilizing the elastic force generated by the elasticity of the elastic tubular member 22.

In this variation, for example, the curved portion 11 of the wire body 9 is inserted through the elastic tubular member 22, and the energizing unit 17 energizes the wire body 9 utilizing the elastic force generated in a part of the elastic tubular member 22 corresponding to the curved portion 11 of the wire body 9.

The elastic tubular member 22 also can be utilized as a protective member for the wire body 9. Thus, by covering not only the curved portion 11 of the wire body 9 but also a part close to the end effector 7 by the elastic tubular member 22, the wire body 9 can be protected from sputter during welding, for example.

Note that, the configuration in FIG. 9 and FIG. 10 may be combined with the configuration in FIG. 4 and FIG. 5 or the configuration in FIG. 7 and FIG. 8. Thus, a plurality of wire bodies 9 may be energized rearward by resultant force of the elastic force of a spring member such as the plate spring 18 or the helical spring 19 and the elastic force of the elastic tubular member 22.

### Description of Reference Numerals

- 1: industrial robot
- 2: base
- 3: lower arm
- 4: upper arm
- 5: wrist portion
- 6: rotary body of wrist portion
- 7: end effector
- 8: hollow part of upper arm
- 9: wire body
- 10: tubular cover member
- 11: curved portion of wire body
- 11a: folded portion of curved portion of wire body
- 12: bracket (mounting member)
- 13: clamp (mounting member)
- 14: open space
- 15: wall portion inside upper arm
- 16: insertion hole formed in wall portion
- 17: energizing unit
- 18: plate spring (elastic body)
- 19: helical spring (elastic body)
- 20: ring member (mounting member)
- 21: bracket (mounting member)
- 22: elastic tubular member (energizing unit)
- J1: first axis
- J2: second axis
- J3: third axis
- J4: fourth axis (longitudinal axis of upper arm)
- J5: fifth axis
- J6: sixth axis (center axis of wrist portion)

## Claims

1. An industrial robot (1), comprising:
an arm portion (4) having a longitudinal axis (J1);
a wrist portion (5) provided to a distal end of the arm portion (4) and swingable about a swing axis (J5) orthogonal to the longitudinal axis (J1);
a plurality of wire bodies (9) inserted through an inside of the arm portion (4) and connected to an end effector (7) mounted to the wrist portion (5); and
an energizing unit (17) configured to energize the plurality of wire bodies (9) in a separate direction away from the wrist portion (5) along the longitudinal axis (J1) of the arm portion (4),
wherein the plurality of wire bodies (9) are inserted through a plurality of tubular members (22), respectively, the plurality of tubular members (22) having elasticities, respectively,
**characterized in that** the energizing unit (17) is configured to energize the plurality of wire bodies (9) utilizing elastic forces generated by the elasticities of the plurality of tubular members (22), respectively,
wherein the plurality of wire bodes (9) have curved portions (11) in parts extending from a base end of the arm portion (4), respectively,
wherein the curved portions (11) of the plurality of wire bodies (9) are inserted through the plurality of tubular members (22), respectively, and
wherein the energizing unit (17) is configured to energize the plurality of wire bodies (9) utilizing the elastic forces generated in parts of the plurality of tubular members (22) corresponding to the curved portions (11) of the plurality of wire bodies (9).

2. The industrial robot according to claim 1, further comprising a tubular cover member (10) which covers a whole of the plurality of wire bodies (9),
wherein the energizing unit (17) further has an elastic body (18) which generates a force biasing the whole of the plurality of wire bodies (9) in the separate direction,
wherein the elastic body (18) includes a spring member (18) whose part is fixed to the arm portion (4),
wherein the spring member (18) includes a plate spring (18) extending along an inner circumferential surface of a part of the tubular cover member (10) corresponding to the curved portions (11), and
wherein the energizing unit (17) is configured to energize the plurality of wire bodies (9) by the elastic forces of the plurality of tubular members (22) and an elastic force of the plate spring (18).

3. The industrial robot according to claim 1 or 2, wherein the arm portion (4) has an open space opened in directions orthogonal to both the longitudinal axis (J1) and the swing axis (J5).

4. The industrial robot according to claim 3,
wherein a part of the open space is defined inside the arm portion (4) by a wall portion (15) provided on an opposite side of the wrist portion (5), and
wherein an insertion hole (16) through which the plurality of wire bodies (9) are inserted is formed in the wall portion (15).

## Patentansprüche

1. Ein Industrieroboter (1), der Folgendes umfasst:
einen Armabschnitt (4) mit einer Längsachse (J1);
ein Handgelenkteil (5), das an einem distalen Ende des Armabschnitts (4) bereitgestellt wird und um eine zur Längsachse (J1) orthogonale Schwenkachse (J5) schwenkbar ist;
eine Vielzahl von Drahtkörpern (9), die durch eine Innenseite des Armabschnitts (4) eingesetzt und mit einem Endeffektor (7) verbunden sind, der am Handgelenkabschnitt (5) montiert ist; und
eine Erregungseinheit bzw. energiespendende Einheit (*energizing unit*) (*17*)*,* die so konfiguriert ist, dass sie die Vielzahl von Drahtkörpern (9) in einer separaten Richtung weg vom Handgelenkabschnitt (5) entlang der Längsachse (J1) des Armabschnitts (4) mit Energie versorgt,
wobei die Vielzahl von Drahtkörpern (9) jeweils durch eine Vielzahl von rohrförmigen Elementen (22) eingesetzt sind, wobei die Vielzahl von rohrförmigen Elementen (22) jeweils Elastizitäten aufweisen,
**dadurch gekennzeichnet, dass**
die energiespendende Einheit (17) so konfiguriert ist, dass sie die Vielzahl von Drahtkörpern (9) unter Verwendung elastischer Kräfte mit Energie versorgt, die durch die Elastizitäten der Vielzahl von rohrförmigen Elementen (22) erzeugt werden,
wobei die Vielzahl von Drahtkörpern (9) gekrümmte Abschnitte (11) in Teilen aufweisen, die sich jeweils ausgehend von einem Basisende des Armabschnitts (4) erstrecken,
wobei die gekrümmten Abschnitte (11) der Vielzahl von Drahtkörpern (9) jeweils durch die Vielzahl von rohrförmigen Elementen (22) eingesetzt sind, und
wobei die energiespendende Einheit (17) so konfiguriert ist, dass sie die Vielzahl von Drahtkörpern (9) unter Verwendung der elastischen Kräfte mit Energie versorgt, die in Teilen der Vielzahl von rohrförmigen Elementen (22) erzeugt werden, die den gekrümmten Abschnitten (11) der Vielzahl von Drahtkörpern (9) entsprechen.

2. Der Industrieroboter nach Anspruch 1, der ferner ein rohrförmiges Abdeckelement (10) umfasst, das eine Gesamtheit der Vielzahl von Drahtkörpern (9) abdeckt,
wobei die energiespendende Einheit (17) ferner einen elastischen Körper (18) aufweist, der eine Kraft erzeugt, die die Gesamtheit der Vielzahl von Drahtkörpern (9) in der separaten Richtung vorspannt,
wobei der elastische Körper (18) ein Federelement (18) beinhaltet, dessen Teil am Armabschnitt (4) befestigt ist,
wobei das Federelement (18) eine Blattfeder (18) beinhaltet, die sich entlang einer inneren Umfangsfläche eines Teils des rohrförmigen Abdeckelements (10) erstreckt, der den gekrümmten Abschnitten (11) entspricht, und
wobei die energiespendende Einheit (17) so konfiguriert ist, dass sie die Vielzahl von Drahtkörpern (9) durch die elastischen Kräfte der Vielzahl von rohrförmigen Elementen (22) und eine elastische Kraft der Blattfeder (18) mit Energie versorgt.

3. Der Industrieroboter nach Anspruch 1 oder 2, wobei der Armabschnitt (4) einen offenen Raum aufweist, der in Richtungen geöffnet ist, die sowohl zur Längsachse (J1) als auch zur Schwenkachse (J5) orthogonal sind.

4. Der Industrieroboter nach Anspruch 3,
wobei ein Teil des offenen Raums innerhalb des Armabschnitts (4) durch einen Wandabschnitt (15) definiert ist, der auf einer gegenüberliegenden Seite des Handgelenkabschnitts (5) bereitgestellt wird, und
wobei ein Einführungsloch (16), durch das die Vielzahl von Drahtkörpern (9) eingesetzt wird, im Wandabschnitt (15) ausgebildet ist.

## Revendications

1. Un robot industriel (1), comprenant :
une portion bras (4) présentant un axe longitudinal (J1) ;
une portion poignet (5) fixée à une extrémité distale de la portion bras (4) et pouvant pivoter autour d'un axe de pivotement (J5) orthogonal à l'axe longitudinal (J1) ;
une pluralité de corps de fil (9) insérés à travers un espace intérieur de la portion bras (4) et reliés à un effecteur (7) monté sur la portion poignet (5) ; et
une unité d'excitation ou encore d'alimentation en énergie (*energizing unit*) (17) configurée pour alimenter en énergie la pluralité de corps de fil (9) dans une direction distincte à l'écart de la portion poignet (5) le long de l'axe longitudinal (J1) de la portion bras (4),
sachant que la pluralité de corps de fil (9) sont insérés à travers une pluralité d'éléments tubulaires (22), respectivement, la pluralité d'éléments tubulaires (22) présentant des élasticités, respectivement,
**caractérisé en ce que**
l'unité d'alimentation en énergie (17) est configurée pour alimenter en énergie la pluralité de corps de fil (9) en utilisant des forces élastiques générées par les élasticités de la pluralité d'éléments tubulaires (22), respectivement,
sachant que la pluralité de corps de fil (9) présente des portions incurvées (11) dans des parties s'étendant à partir d'une extrémité de base de la portion bras (4), respectivement,
sachant que les portions incurvées (11) de la pluralité de corps de fil (9) sont insérées à travers la pluralité d'éléments tubulaires (22), respectivement, et
sachant que l'unité d'alimentation en énergie (17) est configurée pour alimenter en énergie la pluralité de corps de fil (9) en utilisant les forces élastiques générées dans des parties de la pluralité d'éléments tubulaires (22) correspondant aux portions incurvées (11) de la pluralité de corps de fil (9).

2. Le robot industriel d'après la revendication 1, comprenant en outre un élément tubulaire de recouvrement (10) qui recouvre une totalité de la pluralité de corps de fil (9),
sachant que l'unité d'alimentation en énergie (17) présenter en outre un corps élastique (18) qui génère une force sollicitant la totalité de la pluralité de corps de fil (9) dans la direction distincte,
sachant que le corps élastique (18) inclut un élément ressort (18) dont la partie est fixée à la portion bras (4),
sachant que l'élément élastique (18) inclut un ressort à lame (18) s'étendant le long d'une surface circonférentielle intérieure d'une partie de l'élément de recouvrement tubulaire (10) correspondant aux portions courbées (11), et
sachant que l'unité d'alimentation en énergie (17) est configurée pour alimenter en énergie la pluralité de corps de fil (9) par les forces élastiques de la pluralité d'éléments tubulaires (22) et une force élastique du ressort à lame (18).

3. Le robot industriel d'après la revendication 1 ou 2, sachant que la portion bras (4) présente un espace ouvert dans des directions orthogonales à la fois à l'axe longitudinal (J1) et à l'axe de pivotement (J5).

4. Le robot industriel d'après la revendication 3,
sachant qu'une partie de l'espace ouvert est définie à l'intérieur de la portion bras (4) par une portion de paroi (15) prévue sur un côté opposé de la portion poignet (5), et
sachant qu'un trou d'insertion (16), à travers lequel la pluralité de corps de fil (9) est insérée, est formé dans la portion de paroi (15).
